# EUROPÄISCHE PATENTSCHRIFT

(11) **EP 0 570 549 B1**
(45) Veröffentlichungstag und Bekanntmachung des Hinweises auf die Patenterteilung: **06.09.1995**
(21) Anmeldenummer: 92922915.1
(22) Anmeldetag: 13.11.1992
(51) Int. Cl.: B60K 15/035, F02M 25/08

(54) **ENTLÜFTUNGSVORRICHTUNG FÜR EINEN BRENNSTOFFTANK EINER BRENNKRAFTMASCHINE**
VENTILATING DEVICE FOR THE FUEL TANK OF AN INTERNAL COMBUSTION ENGINE
DISPOSITIF DE VENTILATION DU RESERVOIR DE CARBURANT D'UN MOTEUR A COMBUSTION INTERNE

(30) Priorität: 06.12.1991 DE 4140255
(43) Veröffentlichungstag der Anmeldung: 24.11.1993
(73) Patentinhaber: ROBERT BOSCH GMBH, 70442 Stuttgart (DE)
(72) Erfinder: DENZ, Helmut, D-7000 Stuttgart 1 (DE); NEU, Hans, D-7143 Vaihingen-Enz (DE); RIEHL, Guenther, D-7582 Buehlertal (DE); BLUMENSTOCK, Andreas, D-7140 Ludwigsburg (DE); FRANK, Rainer, D-7123 Sachsenheim (DE)
(86) Internationale Anmeldenummer: DE9200945
(87) Internationale Veröffentlichungsnummer: WO9310992

(56) Entgegenhaltungen:
- DE-A- 3 542 194
- DE-A- 4 003 751
- FR-A- 2 622 157
- US-A- 3 791 408
- US-A- 4 175 526
- US-A- 4 862 856
- PATENT ABSTRACTS OF JAPAN vol. 8, no. 214 (M-301)(1561) 9. Juni 1984 & JP-A-59 029 761 (NISSAN) JIDOSHA K.K.) 17. Februar 1984
- PATENT ABSTRACTS OF JAPAN vol. 11, no. 102 (M-576)(2549) 31. März 1987 & JP-A-61 250 371 (NIPPON DENSO CO LTD) 7. November 1986

## Beschreibung

### Stand der Technik

Die Erfindung geht aus von einer Entlüftungsvorrichtung für einen Brennstofftank einer Brennkraftmaschine nach der Gattung des Hauptanspruches. Aus der DE-OS 40 03 751 ist schon eine derartige Entlüftungsvorrichtung mit einem Adsorptionsfilter, beispielsweise einem Aktivkohlefilter, bekannt, der ein Entweichen von Brennstoffdämpfen aus einem Brennstofftank in die Atmosphäre verhindert. Die Brennstoffdämpfe entstehen, sobald der Brennstoff die vom Umgebungsdruck abhängige Sättigungstemperatur überschreitet. Zuerst verdampfen diejenigen Anteile des Brennstoffes, die die niedrigste Sättigungstemperatur aufweisen. Mit zunehmender Brennstofftemperatur oder fallendem Umgebungsdruck steigt die Verdampfungsrate des Brennstoffes. Die Brennstoffdämpfe stellen für die Umwelt eine starke Belastung und für die Menschen, insbesondere beim Einatmen, eine gesundheitliche Gefährdung dar.

Der Adsorptionsfilter ist mit dem Brennstofftank durch eine Filterleitung verbunden, die im Inneren des Adsorptionsfilters beispielsweise in dem Bereich endet, der mit Aktivkohle befüllt ist. Eine Saugleitung, die von einem Tankentlüftungsventil gesteuert wird, verbindet den Adsorptionsfilter mit einem stromabwärts eines Drosselorganes liegenden Abschnitt eines Saugrohres der Brennkraftmaschine.

Die Brennstoffdämpfe werden durch den bei laufender Brennstoffmaschine im Saugrohr hinter dem Drosselorgan herrschenden Unterdruck angesaugt und der Brennkraftmaschine zur Verbrennung zugeführt. In Stillstandszeiten, oder wenn das Tankentlüftungsventil geschlossen ist, oder wenn auf Grund der Lastzustände der Brennkraftmaschine im Saugrohr kein ausreichender Unterdruck aufgebaut wird, der ein Absaugen der Brennstoffdämpfe ermöglicht, werden diese in dem Adsorptionsfilter adsorbiert.

Der begrenzte Bauraum des Adsorptionsfilters bedingt eine begrenzte Speicherkapazität. Zur Regeneration wird der Adsorptionsfilter mit Frischluft gespült, die dem Filter über eine mit der Atmosphäre verbundene Belüftungsleitung zugeführt wird. Die Frischluft gelangt bei im Saugrohr herrschendem Unterdruck und geöffnetem Tankentlüftungsventil zuerst durch ein die Belüftungsleitung steuerndes Absperrventil in den Adsorptionsfilter, wo sie die Brennstoffdämpfe aufnimmt und durch die Saugleitung und das Saugrohr der Brennkraftmaschine zuführt.

Bei geschlossenem Absperrventil und geschlossenem Tankentlüftungsventil sollten aus Funktions- und Umweltschutzgründen der Brennstofftank, die Filterleitung und der Adsorptionsfilter eine gegenüber der Atmosphäre hermetisch dichte Einheit bilden. Zur Überprüfung der Dichtheit wird z.B. in dieser Einheit ein Unterdruck gegenüber der Umgebung eingestellt (siehe DE-OS 40 03 751). Weist eine der Komponenten ein Leck auf, kann der Unterdruck nicht gehalten werden, da Luft von außen in diese Einheit nachströmt. Im Anschluß an diese Leckdiagnose wird das Absperrventil geöffnet, und bei geöffnetem Tankentlüftungsventil strömt Frischluft über das Absperrventil in den Adsorptionsfilter ein, regeneriert den Adsorptionsfilter und wird als Gemischstrom der Brennkraftmaschine zugeführt.

Bei einem derartigen Absperrventil besteht die Gefahr, daß Kondensat sich in dessen elektrischem Bereich ansammelt und zu Störungen oder zum Ausfall des Absperrventiles führt.

Außerdem besteht bei einem derartigen Absperrventil die Gefahr, daß es aufgrund einer Störung des Elektromagnetkreises ungewollt geschlossen gehalten wird und sich dadurch bei geschlossenem Tankentlüftungsventil ein unzulässig hoher Überdruck im Brennstofftank, den Leitungen und im Adsorptionsfilter aufbaut, der zu Störungen führt.

Die in den Adsorptionsfilter einströmende Frischluft enthält Verunreinigungen, z.B. in Form von Staub- und Schmutzpartikeln. Diese Verunreinigungen lagern sich teilweise im Inneren des Absperrventiles ab, beispielsweise an den Dichtflächen eines Ventilschließkörpers und eines Ventilsitzes. Bei einem erneuten Schließen verhindern die abgelagerten Verunreinigungen ein wiederholtes dichtes Schließen des Absperrventiles. Soll die Einheit nun einer weiteren Dichtheitsprüfung unterzogen werden, dringt Luft von außen durch das nicht dicht schließende Absperrventil in die Einheit ein, in der Unterdruck herrscht. Somit ist keine eindeutige Aussage mehr möglich, ob die Undichtheit von einem eventuell vorhandenen Leck irgendwo in der Einheit oder dem nicht dicht schließenden Absperrventil herrührt.

Bei bekannten Entlüftungsvorrichtungen (US-PS 41 75 526, US-PS 48 62 856) ist zwischen Absperrventil und Atmosphäre ein in radialer Erstreckung kleiner Partikelfilter vorgesehen, der sehr feinproig ausgebildet ist, um auch kleinste Schmutzparitkel zurückzuhalten. Dadurch ergibt sich ein sehr hoher pneumatischer Strömungswiderstand des Partikelfilters mit dem Nachteil, daß der Regenerierungsluftstrom am Partikelfilter einen unerwünscht hohen Druckabfall erfährt, der zu einem Unterdruck im Adsorptionsfilter führt. Dieser Unterdruck wird ebenfalls im Brennstofftank wirksam und bewirkt dort eine ungewollte verstärkte Ausgasung des Brennstoffes. Als weiterer Nachteil ist anzuführen, daß bei einem Füllen des Brennstofftankes die gebildeten Dämpfe bei geöffnetem Absperrventil zum Adsorptionsfilter geschoben werden und dabei am Partikelfilter ein Druckabfall erfolgt, der in unerwünschter Weise den Abschaltmechanismus der Brennstoffzapfpistole auslöst.

### Vorteile der Erfindung

Die erfindungsgemäße Entlüftungsvorrichtung für einen Brennstofftank einer Brennkraftmaschine mit den kennzeichnenden Merkmalen des Hauptanspruches hat demgegenüber den Vorteil, daß bei einem sich durch Fehler bildenden Überdruck im Brennstofftank, den Leitungen und im Adsorptionsfilter sichergestellt ist, daß oberhalb eines vorbestimmten Überdruckes eine Druckentlastung über das Absperrventil erfolgt.

Durch die in den Unteransprüchen aufgeführten Maßnahmen sind vorteilhafte Weiterbildungen und Verbesserungen der im Hauptanspruch angegebenen Entlüftungsvorrichtung möglich.

Ein großer Strömungsquerschnitt eines feinporigen Partikelfilters verringert den Druckabfall des durch den Partikelfilter strömenden Mediums und schützt das Absperrventil trotzdem vor Staub- und Schmutzpartikeln. Außerdem weist der Partikelfilter durch die große Oberfläche eine hohe Lebensdauer auf.

Die zumindest teilweise außerhalb des Adsorptionsfilters verlaufende Belüftungsleitung ermöglicht eine einfache Montage des Absperrventils und der Belüftungsleitung. Die für die Steuerung notwendigen elektrischen Anschlüsse müssen nicht durch gegenüber der Umgebung abgedichtete Gehäuseöffnungen nach außen geführt werden.

Vorteilhaft ist weiterhin die Ausgestaltung und Anordnung des Absperrventiles derart, daß sich bildende Kondensate abfließen können, ohne die Funktion des Absperrventiles zu beeinträchtigen.

Durch die Anordnung von wenigstens einem Leitblech im Adsorptionsfilter kann in vorteilhafter Weise eine intensivere und längere Durchströmung des Adsorptionsmediums erfolgen.

### Zeichnung

Ausführungsbeispiele der Erfindung sind in der Zeichnung vereinfacht dargestellt und in der nachfolgenden Beschreibung näher erläutert. Es zeigen Figur 1 ein erstes Ausführungbeispiel einer erfindungsgemäß ausgebildeten Entlüftungsvorrichtung, Figur 2 ein zweites Ausführungsbeispiel eines erfindungsgemäß ausgebildeten, teilweise dargestellten Entlüftungsvorrichtung, Figur 3 ein drittes Ausführungsbeispiel eines erfindungsgemäß ausgebildeten, teilweise dargestellten Entlüftungsvorrichtung.

### Beschreibung der Ausführungsbeispiele

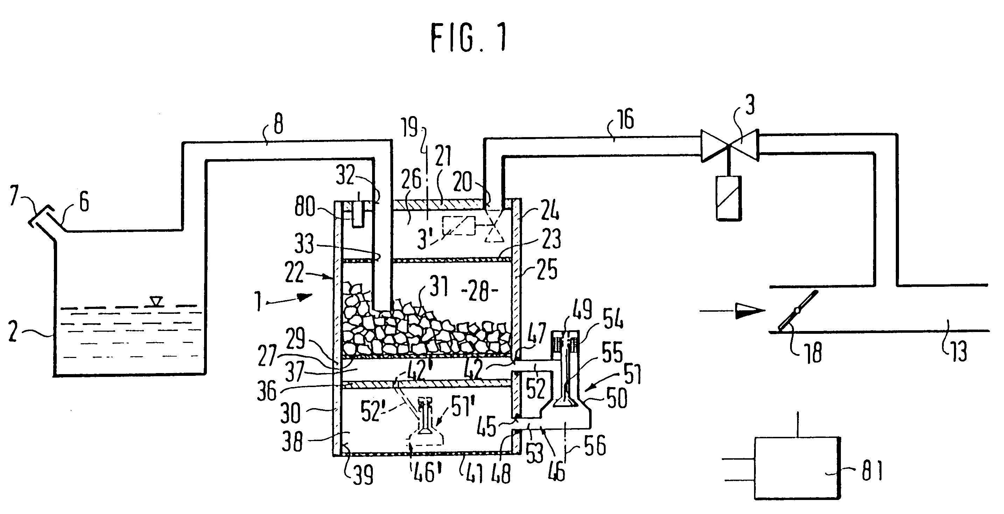

Figur 1 zeigt schematisch eine Entlüftungsvorrichtung für einen Brennstofftank einer Brennkraftmaschine, beispielsweise für ein Kraftfahrzeug. Die Entlüftungsvorrichtung umfaßt unter anderem einen Adsorptionsfilter 1, einen Brennstofftank 2 und ein Tankentlüftungsventil 3. Der Brennstofftank 2 wird über einen Einfüllstutzen 6 befüllt, der mit einem Tankverschluß 7 verschlossen ist. Der Adsorptionsfilter 1 und der Brennstofftank 2 sind durch eine Filterleitung 8 miteinander verbunden, die von einem Bereich des Brennstofftanks 2 ausgeht, in dem sich die dampfförmigen Anteile des Brennstoffes vorzugsweise ansammeln.

An der in Figur 1 durch ein Dreieck dargestellten Phasengrenzschicht zwischen flüssigem und dampfförmigem Brennstoff geht die flüssige Phase bei den durch die Dampfdruckkurve entsprechenden Werten in die dampfförmige Phase über und reichert den über der flüssigen Phase liegenden Raum mit Brennstoffdampf an. Ein handelsüblicher Brennstoff für eine bekannte, beispielsweise gemischverdichtende fremdgezündete Brennkraftmaschine kann Anteile enthalten, deren Sättigungstemperatur unter 40°C liegen, die somit bei einer Brennstofftemperatur von 40°C bereits vollständig verdampft sind. Der Dampfdruck des Brennstoffes entspricht der Summe der Partialdrücke der dampfförmigen Anteile des Brennstoffes. Bei einer Brennstofftemperatur von z.B. 40°C kann der Dampfdruck eines für eine bekannte, beispielsweise gemischverdichtende fremdgezündete Brennkraftmaschine verwendeten Brennstoffes Werte bis zu 1,9 bar erreichen, also über dem Normdruck von ca. 1,013 bar liegen. Mit steigender Temperatur oder fallendem Umgebungsdruck nimmt die Verdampfungsrate zu bis zu dem Punkt, an dem wieder ein Gleichgewichtszustand erreicht ist.

Mit einem Saugrohr 13 der nicht dargestellten Brennkraftmaschine ist der Adsorptionsfilter 1 durch eine Saugleitung 16 verbunden, die von dem Tankentlüftungsventil 3 gesteuert wird. Die Saugleitung 16 endet im Saugrohr 13 in einem stromabwärts eines Drosselorgenes 18 liegenden Abschnitt, in dem lastabhängig Unterdruck herrscht.

Das dem Adsorptionsfilter 1 zugewandte Ende der Saugleitung 16 liegt an einem Saugleitungsanschluß 20 eines beispielsweise scheibenförmigen Gehäusedeckels 21, der ein beispielsweise entsprechend zylindrisches Gehäuse 22 des Adsorptionsfilters 1 an seiner einen Seite abschließt. Der Gehäusedeckel 21 ist mit dem Gehäuse 22 und der Saugleitung 16 dicht verbunden. Mit axialem Abstand zu dem Gehäusedeckel 21 ist im Inneren des Gehäuses 22 eine sich über den rechtwinklig zu einer Gehäuselängsachse 19 verlaufenden gesamten Innenquerschnitt des Gehäuses 22 erstreckende erste gasdurchlässige Filtereinlage 23 angeordnet. Ein ringförmiger Gehäuseabschnitt 24 des Gehäuses 22, der Gehäusedeckel 21 und die Filtereinlage 23 begrenzen einen ersten Stauraum 26, der durch den Saugleitungsanschluß 20 mit der Saugleitung 16 und bei geöffnetem Tankentlüftungsventil 3 mit dem Saugrohr 13 in Verbindung steht.

Auf der dem Gehäusedeckel 21 abgewandten Seite der ersten Filtereinlage 23 überdeckt mit axialem Abstand zu dieser eine zweite Filtereinlage 27 den gesamten Innenquerschnitt des Gehäuses 22 des Adsorptionsfilters 1. Durch einen ringförmigen Gehäuseabschnitt 25 des Gehäuses 22, die erste 23 und die zweite Filtereinlage 27 wird ein Adsorptionsraum 28 begrenzt, der vollständig oder auch nur teilweise mit einem Adsorptionsmedium 31, beispielsweise Aktivkohle, gefüllt ist. Der Adsorptionsraum 28 steht durch die gasdurchlässige erste Filtereinlage 23 mit dem ersten Stauraum 26 in Verbindung.

Die den Brennstofftank 2 mit dem Adsorptionsfilter 1 verbindende Filterleitung 8 ist mittels eines Filteranschlusses 32 durch den Gehäusedeckel 21 geführt und mit dem Gehäusedeckel 21 dicht verbunden. Der erste Stauraum 26 wird in seiner gesamten axialen Erstreckung von der Filterleitung 8 durchdrungen. Im weiteren Verlauf durchdringt die Filterleitung 8 die erste Filtereinlage 23 in einer Öffnung 33 und endet z.B. im mit Aktivkohle gefüllten Adsorptionsraum 28. Der Brennstofftank 2 und der Adsorptionsraum 28 stehen somit durch die Filterleitung 8 unmittelbar in Verbindung.

Eine gasdichte Trennwand 36 durchdringt den Innenquerschnitt des Gehäuses 22 auf der dem Adsorptionsraum 28 abgewandten Seite der zweiten Filtereinlage 27 und ist mit dem Gehäuse 22 dicht verbunden. Ein zweiter Stauraum 37 wird durch einen Gehäuseabschnitt 29 des Gehäuses 22, die zweite Filtereinlage 27 und die Trennwand 36 begrenzt. Der erste Stauraum 26, der Adsorptionsraum 28 und der zweite Stauraum 37 sind durch die erste 23 und zweite Filtereinlage 27 gasdurchlässig miteinander verbunden.

Die Trennwand 36 und ein ringförmiger Endabschnitt 30 des Gehäuses 22 bilden einen topfförmigen, zur Atmosphäre hin offenen Filterraum 38, der an seinem der Trennwand 36 gegenüberliegenden Ende von einem feinporigen Partikelfilter 41 vollständig überdeckt ist. Der Partikelfilter 41 erstreckt sich somit über den gesamten Innenquerschnitt des Gehäuses 22 und trennt den Filterraum 38 gasdurchlässig von der Atmosphäre und ist in der Lage, feinste Schmutzpartikel aus der Atmosphäre zurückzuhalten. Eine Innenwandung 39 umschließt den Innenquerschnitt des Gehäuses 22, so daß sich also der Partikelfilter 41 wenigstens über die durch die Innenwandung 39 begrenzte lichte Weite des Gehäuses 22 erstreckt. Der Partikelfilter 41 ist also großflächig quer zum Regenerierluftstrom ausgebildet und bewirkt damit nur einen geringen Druckabfall unter 5 mbar bei einem Luftstrom von ca. 3 m³/h.

Der Gehäusedeckel 21, das Gehäuse 22 und die Trennwand 36 bilden einen abgeschlossenen Raum, der durch den Saugleitungsanschluß 20, den Filterleitungsanschluß 32 sowie einen ersten Belüftungsleitungsanschluß 42 nach außen Verbindung hat. Zum Filterraum 38 offen weist das Gehäuse 22 einen zweiten Belüftungsleitungsanschluß 45 auf, der beispielsweise die gleiche Winkelkoordinate bezüglich des zylindrischen Gehäuses 22 wie der erste Belüftungsleitungsanschluß 42 hat. In die zwei Belüftungsleitungsanschlüsse 42, 45 wird je ein Ende einer beispielsweise U-förmigen Belüftungsleitung 46 dicht eingeschoben, so daß der Filterraum 38 und der zweite Stauraum 37 miteinander verbunden sind. Die Belüftungsleitung 46 wird durch elastische Dichtelemente 47, 48, z.B. O-Ringe, gegenüber dem Gehäuse 22 abgedichtet.

Ein Absperrventil 51, beispielsweise ein elektromagnetisch betätigbares Ventil, steuert die Belüftungsleitung 46. Dabei bilden ein oberer Stutzen 52 des Absperrventiles 51, der in den ersten Belüftungsleitungsanschluß 42 eingesteckt ist, und ein unterer Stutzen 53 des Absperrventiles, der in den zweiten Belüftungsleitungsanschluß 45 eingesteckt ist, jeweils Abschnitte der Belüftungsleitung 46. Um zu vermeiden, daß bei versehentlich oder aufgrund von Störungen geschlossenem Tankentlüftungsventil 3 und Absperrventil 51 ein von Brennstoffdämpfen erzeugter Überdruck zum Bersten des Brennstofftankes 2, der Filterleitung 8, der Saugleitung 16 oder des Gehäuses 22 des Adsorptionsfilters 1 führt, muß das Absperrventil 51 durch einen Überdruck zwangsgeöffnet werden können. Hierfür muß der Magnetkreis 54 des Absperrventils 51 so ausgelegt sein, daß bei einem vorbestimmten Überdruck im Adsorptionsfilter 1, beispielsweise 0,3 bar, die hierdurch auf ein Ventilschließteil 55 wirkende Druckkraft ausreicht, um das bei Erregung des Magnetkreises 54 in Schließstellung des Absperrventiles 51 verschobene Ventilschließteil 55 entgegen der Magnetkraft in Öffnungsstellung des Absperrventiles zu verschieben. So kann das Absperrventil 51, wie in Figur 1 dargestellt mit einem Ventilschließteil 55 ausgebildet sein, das durch eine Rückstellfeder 49 im nichterregten Zustand des Magnetkreises 54 in Öffnungsstellung in Richtung zu dem mit dem Filterraum 38 verbundenen unteren Stutzen 53 verschoben wird, also von einem in Richtung zu dem oberen Stutzen 52 liegenden Ventilsitz 50 abgehoben ist. Bei erregtem Magnetkreis 54 wird das Ventilschließteil 55 an den Ventilsitz 50 in Richtung zum oberen Stutzen 52 geschoben und zwar nur mit einer derartigen Kraft, das eine durch einen Überdruck von etwa 0,3 bar im Adsorptionsfilter 1 erzeugte Druckkraft ausreicht, um das Ventilschließteil 55 entgegen der Magnetkraft vom Ventilsitz 50 weg in Richtung zum unteren Stutzen 53 zu schieben. Durch das nun offene Absperrventil 51 kann sich der Druck im Adsorptionsfilter 1 und Brennstofftank 2 abbauen. In nicht dargestellter Weise kann das Absperrventil 51 auch mit einem Ventilschließteil ausgebildet sein, das bei erregtem Magnetkreis entgegen der Kraft einer Rückstellfeder in Richtung vom oberen Stutzen 52 zum unteren Stutzen 53 verschoben wird und dabei an dem Ventilsitz so lange zur Anlage kommt, bis eine durch einen Überdruck von ca. 0,3 bar erzeugte Druckkraft im Adsorptionsfilter, die am Ventilschließteil angreift, das Ventilschließteil entgegen der Magnetkraft vom Ventilsitz abhebt und eine oben beschriebene Druckentlastung ermöglicht. Im nicht erregten Zustand des Magnetkreises wird das Ventilschließteil durch die Rückstellfeder in Richtung zum oberen Stutzen 52, also vom Ventilsitz weg, in Öffnungsstellung des Absperrventils bewegt.

In gestrichelter Darstellung ist in Figur 1 ebenfalls ein Absperrventil 51' gezeigt, das innerhalb des Filterraumes 38 angeordnet ist und für das die gleichen Aussagen bezüglich Funktion und Aufbau wie für das Absperrventil 51 gelten. Dabei sind die Belüftungsanschlüsse 42 und 45 im Gehäuse 22 geschlossen. Der Belüftungsanschluß 42' durchdringt die Trennwand 36 und ist mit dem geneigt nach oben verlaufenden oberen Stutzen 52' des Absperrventiles 51' verbunden. Ein unterer Stutzen kann beim Absperrventil 51' entfallen, da das vertikal angeordnete Absperrventil 51' in Richtung zum Partikelfilter 41 hin unten offen sein kann. Das Absperrventil 51 erfüllt somit auch die Funktion eines Sicherheitsventiles.

Das Absperrventil 51 ist im stromlosen Zustand geöffnet, um bei Ausfall der Stromversorgung, z.B. nach einem Unfall, einen Druckanstieg im Brennstofftank 2 zu vermeiden. Zur Öffnung des Absperrventiles 51 im stromlosen Zustand dient in bekannter Weise z.B. die Rückstellfeder 49.

Um ein Eindringen von Kondensat in stromführende Bauteile, z.B. in einen Magnetkreis 54 mit Magnetspule und Kern des Absperrventiles 51 zu verhindern, ist das Absperrventil 51 so ausgerichtet, daß der Magnetkreis 54 an dem im Gravitationsfeld höchstgelegenen Punkt des Absperrventils 51 angeordnet ist. Der Abfluß von Kondensat aus dem zweiten Stauraum 37, der Belüftungsleitung 46 und dem Absperrventil 51 in Richtung Atmosphäre wird dadurch begünstigt, daß das Ventilschließteil 55 eine vertikale Öffnungs- und Schließbewegung entlang einer vertikalen Achse 56 ausführt und der Ventilsitz 50 konzentrisch zu dieser vertikalen Achse 56 ist. Der Magnetkreis 54 liegt dabei oberhalb des Ventilsitzes 50 und bespielsweise auch oberhalb des oberen Stutzens 52 bzw. oberhalb der Luftführung im Absperrventil 51 vom oberen Stutzen 52 zum Ventilsitz 50. Eine Neigung der Stutzen 52 und 53 nach unten, wie beim oberen Stutzen 52' des Absperrventiles 51' gezeigt, verbessert zusätzlich den Kondensatabfluß.

Verdampfen Teile des Brennstoffes, so gelangen diese durch die Filterleitung 8 in den Adsorptionsraum 28 des Adsorptionsfilters 1 und werden von dort bei geöffnetem Tankentlüftungsventil 3 infolge des im Saugrohr 13 der laufenden Brennkraftmaschine herrschenden, lastabhängigen Unterdruckes durch die Saugleitung 16 in das Saugrohr 13 abgesaugt und der Brennkraftmaschine zur Verbrennung zugeführt. Bei geschlossenem Tankentlüftungsventil 3 oder im Falle eines zu geringen Unterdruckes im Saugrohr 13 werden die aus dem Brennstofftank 2 entweichenden Brennstoffdämpfe durch die Aktivkohle im Adsorptionsraum 28 des Adsorptionsfilters 1 gespeichert. Wird das Tankentlüftungsventil 3 wieder geöffnet oder fällt der Druck im Saugrohr 13 ab wird Frischluft über den Partikelfilter 41 aus der Atmosphäre durch den Adsorptionsfilter 1 gesaugt und regeneriert die Aktivkohle im Adsorptionsraum 28 des Adsorptionsfilters 1. Die an der Aktivkohle angelagerten Teile der Brennstoffdämpfe werden aufgenommen und durch die Saugleitung 16 der Brennkraftmaschine zur Verbrennung zugeführt.

Um eine Verunreinigung des Adsorptionsfilters 1, insbesondere des Absperrventiles 51, zu verhindern wird die aus der Atmosphäre in den Adsorptionsfilter 1 einströmende Luft zuerst von dem Partikelfilter 41 von Verunreinigungen, z.B. in Form von Staub, gesäubert. Die Frischluftströmung erfährt durch das Partikelfilter 41 einen Druckabfall, der sich als Unterdruck direkt in den Brennstofftank fortpflanzt und dort die Verdampfungsrate des Brennstoffes ungewollt er höht. Um die Emission von Brennstoffdämpfen weiter zu senken, kann beim Betanken eine gegenüber dem Einfüllstutzen 6 dichtende Zapfpistole verwendet werden. In diesem Fall werden die Brennstoffdämpfe durch das Adsorptionsfilter 1 verdrängt und rufen unter anderem am Partikelfilter 41 einen Druckabfall hervor, der zu einem Druckanstieg an der Zapfpistole führt, der bei Erreichen einer bestimmten Größe ungewollt den automatischen Abschaltmechanismus der Zapfpistole auslöst.

Die Querschnittsfläche des Partikelfilters 41 beeinflußt neben der Porengröße maßgeblich den am Partikelfilter 41 hervorgerufenen Druckabfall. Um eine ausreichende Reinigung der angesaugten Frischluft zu erreichen, muß die Porengröße sehr klein, also ein kleinporiger Partikelfilter 41 gewählt werden, wodurch der Druckabfall stark ansteigt. Durch eine große Querschnittsfläche kann dieser unerwünschte Nebeneffekt kompensiert werden, so daß die Gefahr eines ungewollten Auslösens des Abschaltmechanismus der Zapfpistole ebenso wie die Erhöhung der Verdampfungsrate des im Brennstofftank 2 befindlichen Brennstoffes vermindert ist. Der Partikelfilter 41 erhält dadurch eine große Querschnittsfläche mit einem Druckabfall in vertretbarer Größe, daß der Partikelfilter 41 sich wenigstens über den gesamten Innenquerschnitt des Gehäuses 22 erstreckt.

Zur Überprüfung der Dichtheit der Entlüftungsvorrichtung wird das Absperrventil 51 bzw. 51' geschlossen. Durch den im Saugrohr herrschenden Unterdruck stellt sich im Brennstofftank 2, der Filterleitung 8, dem Adsorptionsfilter 1 und der Saugleitung 16 ein Unterdruck ein. Anschließend wird das Tankentlüftungsventil 3 geschlossen.

Sind der Brennstofftank 2, die Filterleitung 8, der Adsorptionsfilter 1, die Saugleitung 16, das Tankentlüftungsventil 3 und das Absperrventil 51 bzw. 51' sowie sämtliche Verbindungen der oben genannten Bauteil ohne Leck, so bleibt der Unterdruck erhalten. Zur Ermittlung des Druckes dient ein Drucksensor 80, der z.B. am Adsorptionsfilter 1 angeordnet ist und in einen der Räume 26, 28 oder 37 ragt. Der Drucksensor 80 ist, wie auch das Tankentlüftungsventil 3 und das Absperrventil 51 bzw. 51', mit einem elektronischen Steuergerät 81 verbunden. Weist eines dieser Bauteil oder eine Verbindung ein Leck auf, strömt Luft in Richtung der Unterdruckgebiete und führt zu einem Druckausgleich, so daß der Unterdruck nur über kurze Zeit aufrecht erhalten werden kann und der Drucksensor 80 an das Steuergerät 81 ein sich änderndes Signal übermittelt.

Von besonderer Wichtigkeit ist in diesem Zusammenhang ein dichtes Schließen sowohl des Absperrventils 51 als auch des Tankentlüftungsventils 3. Schließt eines der genannten Ventile nicht vollständig, dringt Luft durch das undichte Ventil in den abgesperrten Raum ein. Es kann keine zuverlässige Aussage mehr getroffen werden, inwieweit das System ein Leck aufweist oder ob die Luft durch ein nicht vollständig schließendes Ventil eindringt. Besonders anfällig ist das Absperrventil 51, das von der den Adsorptionsfilter 1 regenerierenden Frischluft zuerst durchströmt wird. Hierbei ist die Gefahr besonders groß, daß sich Verunreinigungen der Luft im Absperrventil 51 absetzen und ein vollständig dichtes Schließen verhindern. Das großflächige, in das Gehäuse 22 integrierte und den Innenquerschnitt überdeckende Partikelfilter 41 verhindert ein Verschmutzen des Absperrventils 51, ohne durch einen zu großen Druckabfall der es durchströmenden Frischluft die allgemeine Funktionsfähigkeit der Entlüftungsvorrichtung zu beeinträchtigen.

Das Tankentlüftungsventil kann statt irgendwo in der Saugleitung 16 auch zu Beginn der Saugleitung 16, also direkt am oder im Adsorptionsfilter 1, wie durch das gestrichelt gezeichnete Tankentlüftungsventil 3' gezeigt ist, angeordnet sein. Die Anordnung einzelner oder aller Komponenten wie Absperrventil, Tankentlüftungsventil, Drucksensor und Partikelfilter am bzw. im Adsorptionsfilter führt zu einer sehr kompakten Montageeinheit, die am Kraftfahrzeug nur noch mit dem Brennstofftank und dem Saugrohr verbunden werden muß.

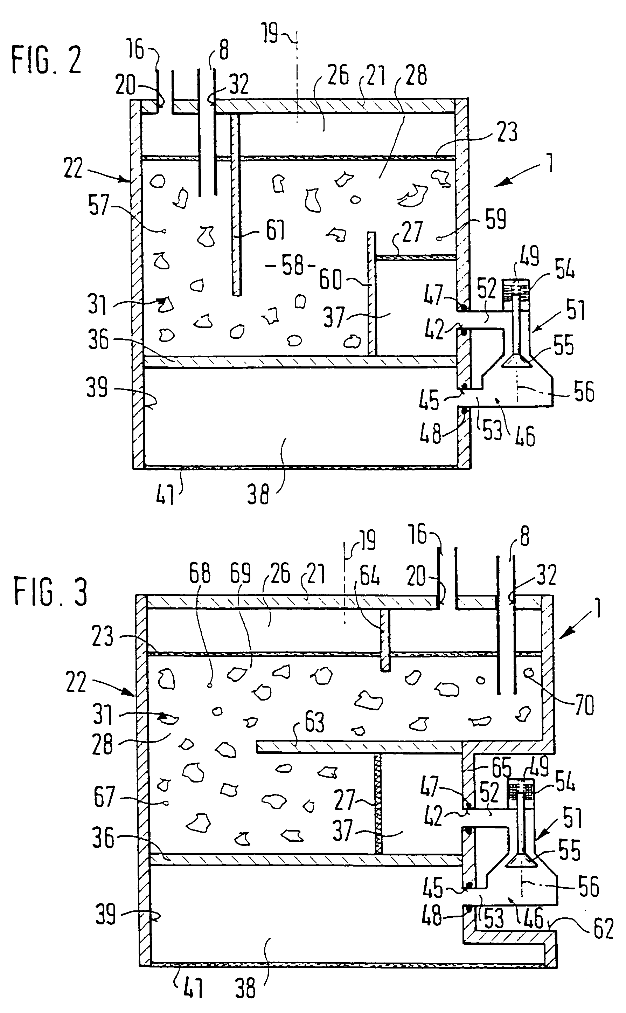

Figur 2 und 3 zeigen zwei weitere Ausführungsbeispiele einer erfindungsgemäß ausgebildeten Entlüftungsvorrichtung mit einem Adsorptionsfilter für einen Brennstofftank, wobei dieser, das Tankentlüftungsventil und das Saugrohr weggelassen wurden. Gegenüber dem Ausführungsbeispiel nach Figur 1 gleiche und gleichwirkende Bauteile sind mit gleichen Bezugszeichen gekennzeichnet. Der in Figur 2 gezeigte Adsorptionsfilter 1 weist einen durch die erste Filtereinlage 23 von dem Adsorptionsraum 28 getrennten ersten Stauraum 26 auf sowie einen zweiten Stauraum 37, der abweichend von dem in Figur 1 gezeigten Ausführungsbeispiel von dem zumindest teilweise mit dem Adsorptionsmedium 31 gefüllten Adsorptionsraum 28 durch die zweite Filtereinlage 27 und ein erstes Leitblech 60 getrennt ist. Der zweite Stauraum 37 erstreckt sich nur teilweise über den gesamten Innenquerschnitt des Gehäuses 22. Hierfür ragt das erste Leitblech 60 von der Trennwand 36 ausgehend, beispielsweise in Längsrichtung der Innenwandung 39 des Gehäuses 22 und senkrecht zur Trennwand 36, teilweise in den Adsorptionsraum 28 hinein und endet mit Abstand zur ersten Filtereinlage 23, so daß zwischen dem ersten Leitblech 60 und der ersten Filtereinlage 23 ein freier Querschnitt verbleibt. Das erste Leitblech 60 hat dabei einen geringen Abstand von der beispielsweise rechten Innenwandung 39 des Gehäuses 22.

Mit seitlichem Abstand zu dem ersten Leitblech 60 von der rechten Innenwandung 39 weg ragt von dem Gehäusedeckel 21 ausgehend, beispielsweise senkrecht zu dem Gehäusedeckel 21, ein zweites Leitblech 61 teilweise in den Adsorptionsraum 28 bis mindestens in das Adsorptionsmedium 31 hinein. Zwischen dem der Trennwand 36 zugewandten Ende des zweiten Leitbleches 61 bleibt ein Querschnitt frei. Der Adsorptionsraum 28 ist durch die zwei, beispielsweise parallelen Leitbleche 60, 61 in drei, beispielsweise zwei annähernd gleich große 57, 58 und eine um das Volumen des Stauraumes 37 kleinere Kammer 59 unterteilt, die untereinander durch die zwischen dem ersten Leitblech 60 und dem ersten Filtereinsatz 23 sowie dem zweiten Leitblech 61 und der Trennwand 36 freibleibenden Querschnitte verbunden sind. Die kleinere rechte Kammer 59 ist durch die erste Filtereinlage 23 gasdurchlässig mit dem ersten Stauraum 26 und durch die zweite Filtereinlage 23 mit dem zweiten Stauraum 37 verbunden.

Der Saugleitungsanschluß 20 und der Filterleitungsanschluß 32 sind in dem Bereich des Gehäusedeckels 21 angeordnet, der teilweise die linke Kammer 57 begrenzt, so daß zwischen dem Eintritt der Frischluft an der zweiten Filtereinlage 27 und dem Saugleitungsanschluß 20 eine größtmögliche Wegstrecke liegt, also viel Adsorptionsmedium 31 umströmt wird.

Das bereits zum Ausführungsbeispiel nach Figur 1 beschriebene Absperrventil 51 ist in der dort erläuterten Weise mit den Stutzen 52 und 53 in Belüftungsleitungsanschlüsse 42 und 45 eingesteckt, so daß durch das Absperrventil 51 eine Verbindung zwischen dem Filterraum 38, der durch den großflächigen Partikelfilter 41 begrenzt wird, und dem zweiten Stauraum 37 herstellbar ist.

Abweichend von dem Adsorptionsfilter nach den Figuren 1 und 2 hat das Gehäuse 22 des Adsorptionsfilters 1 nach Figur 3 eine seitliche Einbuchtung 62, deren Größe so bemessem ist, daß das Absperrventil 51 und die Belüftungsleitung 46 darin Platz finden ohne den Umriß des Gehäuses 22 zu überragen. In einer zu der Innenwandung 39 des Gehäuses 22 parallelen Längswand 65 der Einbuchtung 62 sind die beiden Belüftungsleitungsanschlüsse 42 zum zweiten Stauraum 37 und 45 zum Filterraum 38 angeordnet, in die die Stutzen 52 und 53 der Belüftungsleitung 46 eingesteckt sind. Zwischen der Trennwand 36 und der ersten Filtereinlage 23 ist ein z.B. parallel zu diesen verlaufendes, von der Innenwandung 39 an der Einbuchtung 62 ausgehendes und in den Adsorptionsraum 28 mit Abstand zur ersten Filtereinlage 23 hineinragendes unteres Leitblech 63 angeordnet, das sich jedoch nicht über den gesamten Querschnitt des Gehäuses 22 bis zur gegenüberliegenden Innenwandung 39 erstreckt. Zwischen dem im Adsorptionsraum 28 liegenden Ende des unteren Leitbleches 63 und der Innenwandung 39 des Gehäuses 22 bleibt ein Querschnitt frei.

Der Adsorptionsraum 28 wird von dem unteren Leitblech 63 in eine untere Kammer 67 an der Trennwand 36 und eine obere Kammer 68 an der ersten Filtereinlage 23 unterteilt. Mit seitlichem Abstand zu der Längswand 65 der Einbuchtung 62 ist zwischen dem unteren Leitblech 63 und der Trennwand 36 die zweite Filtereinlage 27 angeordnet und begrenzt zusammen mit der Trennwand 36, dem unteren Leitblech 63 und dem Gehäuse 22 den zweiten Stauraum 37. Von dem Gehäusedeckel 21 ragt ein oberes Leitblech 64 teilweise in den Adsorptionsraum 28, aber mindestens bis in das Adsorptionsmedium 31 hinein und unterteilt die obere Kammer 68 in eine linke Kammer 69 und eine rechte Kammer 70. Der Saugleitungsanschluß 20 und der Filterleitungsanschluß 32 sind in dem Bereich des Gehäusedeckels 21 angeordnet, der über der rechten Kammer 70 liegt. Das obere Leitblech 64 endet oberhalb des unteren Leitbleches 63, so daß zwischen dem oberen Leitblech 64 und dem unteren Leitblech 63 ein vertikaler freier Querschnitt verbleibt, über den ein Gasaustausch zwischen den Kammern 69 und 70 erfolgen kann. Auf diese Art und Weise wird zwischen dem Eintritt der Frischluft im zweiten Stauraum 37 und dem Saugleitungsanschluß 20 eine größtmögliche Wegstrecke erreicht und damit viel Adsorptionsmedium 31 umströmt. Das mittels der Stutzen 52 und 53 in die Belüftungsleitungsanschlüsse 42 und 45 der Einbuchtung 62 eingesetzte Absperrventil 51 ist in die Kontur des Gehäuses 22 eingeschlossen und damit gegen Beschädigung besser geschützt.

## Patentansprüche

1. Entlüftungsvorrichtung für einen Brennstofftank einer Brennkraftmaschine mit einem Adsorptionsfilter (1) in einem Gehäuse (22), das einerseits durch eine Saugleitung (16) mit einem Saugrohr (13) einer Brennkraftmaschine und andererseits durch eine Filterleitung (8) mit dem Brennstofftank (2) in Verbindung steht und mit einer zur Atmosphäre führenden Belüftungsleitung (46, 46'), die durch ein Absperrventil (51, 51') mit einem Ventilsitz und einem Ventilschließteil (55) absperrbar ist, dadurch gekennzeichnet, daß das Absperrventil (51, 51') mit einem das Ventilschließteil (55) im erregten Zustand in Schließstellung bewegenden Magnetkreis (54) versehen ist, der nur so stark ausgebildet ist, daß oberhalb eines vorbestimmten Überdruckes im Adsorptionsfilter (1) die dadurch erzeugte Druckkraft ausreicht, das Ventilschließteil (55) in Öffnungsstellung zu verschieben.

2. Vorrichtung nach Anspruch 1, dadurch gekennzeichnet, daß das Absperrventil (51, 51') eine vertikale Achse (56) hat und ein Ventilschließteil (55) des Absperrventiles (51, 51') so entlang der vertikalen Achse (56) verschiebbar angeordnet ist, daß sich gebildetes Kondensat ungehindert bei von einem Ventilsitz (50) abgehobenem Ventilschließteil (55) nach unten abfließen kann.

3. Vorrichtung nach Anspruch 2, dadurch gekennzeichnet, daß das Absperrventil (51, 51') mittels eines Magnetkreises (54) betätigbar ist und der Magnetkreis (54) oberhalb der Luftführung durch das Absperrventil (51, 51') angeordnet ist.

4. Vorrichtung nach Anspruch 2 oder 3, dadurch gekennzeichnet, daß das Absperrventil (51, 51') Stutzen (52, 53) zur Luftzufuhr bzw. Luftabfuhr hat und wenigstens einer der Stutzen (52, 53) geneigt verläuft.

5. Vorrichtung nach Anspruch 2 oder 3, dadurch gekennzeichnet, daß das Absperrventil (51) mittels Stutzen (52, 53) gasdicht in Belüftungsleitungsanschlüsse (42, 45) des Gehäuses (22) steckbar ist.

6. Vorrichtung nach Anspruch 1, dadurch gekennzeichnet, daß die Belüftungsleitung (46) zumindest teilweise außerhalb des Gehäuses (22) verläuft und das Absperrventil (51) außerhalb des Gehäuses (22) angeordnet ist.

7. Vorrichtung nach Anspruch 6, dadurch gekennzeichnet, daß das Absperrventil (51) in einer Einbuchtung (62) des Gehäuses (22) angeordnet ist.

8. Vorrichtung nach Anspruch 6, dadurch gekennzeichnet, daß das Absperrventil (51) mit dem Gehäuse (22) des Adsorptionsfilters (1) eine kompakte Montageeinheit bildet.

9. Vorrichtung nach Anspruch 1, dadurch gekennzeichnet, daß ein Partikelfilter (41) am Gehäuse (22) des Adsorptionsfilters (1) angeordnet und so großflächig ausgebildet ist, daß er nur einen geringen Druckabfall im Adsorptionsfilter (1) bewirkt.

10. Vorrichtung nach Anspruch 9, dadurch gekennzeichnet, daß der Partikelfilter (41) eine Außenwand des Gehäuses (22) bildet und einen Filterraum (38) im Gehäuse (22) gasdurchlässig mit der Atmosphäre verbindet.

11. Vorrichtung nach Anspruch 10, dadurch gekennzeichnet, daß der Partikelfilter (41) sich über einen Innenquerschnitt des Gehäuses (22) erstreckt, der senkrecht zu einer Gehäuselängsachse (19) verläuft.

12. Vorrichtung nach Anspruch 10 oder 11, dadurch gekennzeichnet, daß der Filterraum (38) durch eine Trennwand (36) von einem Stauraum (37) getrennt ist, der mit einem ein Adsorptionsmedium (31) aufnehmenden Adsorptionsraum (28) im Gehäuse (22) verbunden ist, und der Filterraum (38) mit dem Stauraum (37) durch die Belüftungsleitung (46) verbunden ist.

13. Vorrichtung nach Anspruch 10 oder 11, dadurch gekennzeichnet, daß der Filterraum (38) durch eine Trennwand (36) von einem Adsorptionsmedium (31) aufnehmenden Adsorptionsraum (28) im Gehäuse (22) getrennt und durch die Belüftungsleitung (46) mit diesem verbunden ist.

14. Vorrichtung nach Anspruch 12 oder 13, dadurch gekennzeichnet, daß der Adsorptionsraum (28) durch wenigstens ein die Luftströmung umlenkendes Leitblech (60, 61; 63, 64) in Kammern (57, 58, 59; 67, 68, 69, 70) unterteilt ist.

15. Vorrichtung nach Anspruch 1, dadurch gekennzeichnet, daß in oder an dem Adsorptionsfilter (1) ein Drucksensor (80) angebracht ist.

16. Vorrichtung nach Anspruch 1, dadurch gekennzeichnet, daß in oder an dem Adsorptionsfilter (1) ein Tankentlüftungsventil (3) zur Steuerung der Zuführung von Brennstoffdampf durch die Saugleitung (16) zum Saugrohr (13) der Brennkraftmaschine angebracht ist.

## Claims

1. Ventilating device for a fuel tank of an internal combustion engine, having an adsorption filter (1) in a housing (22) which is connected on the one hand through a suction line (16) to an intake manifold (13) of an internal combustion engine and on the other hand to the fuel tank (2) by means of a filter line (8), and having a ventilating line (46, 46') which leads to the atmosphere and can be shut off by means of a stop valve (51, 51') with a valve seat and a valve closing element (55), characterized in that the stop valve (51, 51') is provided with a magnetic circuit (54) which moves the valve closing element (55) into the closed position in the excited state and is constructed to be only of such a strength that the pressure generated thereby above a predetermined overpressure in the adsorption filter (1) is sufficient to displace the valve closing element (55) into the open position.

2. Device according to Claim 1, characterized in that the stop valve (51, 51') has a vertical axis (56), and a valve closing element (55) of the stop valve (51, 51') is arranged so as to be capable of being displaced along the vertical axis (56) in such a way that when the valve closing element (55) is lifted off from a valve seat (50) condensate which has formed can flow off downwards.

3. Device according to Claim 2, characterized in that the stop valve (51, 51') can be actuated by means of a magnetic circuit (54) and the magnetic circuit (54) is arranged above the air guide through the stop valve (51, 51').

4. Device according to Claim 2 or 3, characterized in that the stop valve (51, 51') has connection elements (52, 53) for feeding in and leading off air and at least one of the connection elements (52, 53) extends at an incline.

5. Device according to Claim 2 or 3, characterized in that the stop valve (51) can be plugged in a gastight way into ventilating line connections (42, 45) of the housing (22) by means of connection elements (52, 53).

6. Device according to Claim 1, characterized in that the ventilating line (46) runs at least partially outside the housing (22) and the stop valve (51) is arranged outside the housing (22).

7. Device according to Claim 6, characterized in that the stop valve (51) is arranged in a recess (62) in the housing (22).

8. Device according to Claim 6, characterized in that the stop valve (51) forms with the housing (22) of the adsorption filter (1) a compact mounting unit.

9. Device according to Claim 1, characterized in that a particle filter (41) is arranged on the housing (22) of the adsorption filter (1) and is constructed to be of such a size that it brings about only a small decrease in pressure in the adsorption filter (1).

10. Device according to Claim 9, characterized in that the particle filter (41) forms an external wall of the housing (22) and connects a filter space (38) in the housing (22) to the atmosphere in a gas-permeable way.

11. Device according to Claim 10, characterized in that the particle filter (41) extends over an internal cross-section of the housing (22) which runs perpendicular to a longitudinal axis (19) of the housing.

12. Device according to Claim 10 or 11, characterized in that the filter space (38) is separated from a pressure space (37) by means of a dividing wall (36), the said pressure space (37) being connected to an adsorption space (28), which receives an adsorption medium (31), in the housing (22), and the filter space (38) being connected to the pressure space (37) by means of the ventilating line (46).

13. Device according to Claim 10 or 11, characterized in that the filter space (38) is separated from an adsorption space (28), which receives adsorption medium (31), in the housing (22) by means of a dividing wall (36) and is connected to the said space (28) by means of the ventilating line (46).

14. Device according to Claim 12 or 13, characterized in that the adsorption space (28) is divided into chambers (57, 58, 59; 67, 68, 69, 70) by means of at least one baffle plate (60, 61; 63, 64) which diverts the air flow.

15. Device according to Claim 1, characterized in that a pressure sensor (80) is provided in or on the adsorption filter (1).

16. Device according to Claim 1, characterized in that a tank ventilating valve (3) is provided in or on the adsorption filter (1) in order to control the supply of fuel vapour through the suction line (16) to the intake manifold (13) of the internal combustion engine.

## Revendications

1. Dispositif de ventilation d'un réservoir de carburant d'un moteur à combustion interne équipé d'un filtre adsorbant (1) logé dans un boîtier (22) relié d'une part par une conduite d'aspiration (16) à une tubulure d'aspiration (13) du moteur à combustion interne et d'autre part par une conduite de filtre (8) au réservoir de carburant (2), et une conduite de ventilation (46, 46') débouchant à l'atmosphère, cette conduite pouvant être fermée par une soupape d'arrêt (51, 51') comprenant un siège de soupape et un organe d'obturation (55), caractérisé en ce que la soupape d'arrêt (51, 51') est munie d'un circuit magnétique (54) qui déplace l'organe d'obturation (55) à l'état excité pour le mettre dans la position de fermeture, ce circuit étant seulement d'une puissance telle qu'au-dessus d'une surpression prédéterminée régnant dans le filtre adsorbant (1), la poussée créée est suffisante pour déplacer l'organe d'obturation (55) vers la position d'ouverture.

2. Dispositif selon la revendication 1, caractérisé en ce que la soupape d'arrêt (51, 51') a un axe vertical (56), et un organe d'obturation (55) de la soupape d'arrêt (51, 51') est coulissant le long de l'axe vertical (56) pour que le condensat formé puisse s'écouler sans difficulté par le dessous de l'organe d'obturation (55) soulevé du siège (50).

3. Dispositif selon la revendication 2, caractérisé en ce que la soupape d'arrêt (51, 51') peut être actionnée par un circuit magnétique (54), et ce circuit (54) se trouve au-dessus du passage de l'air à travers la soupape d'arrêt (51, 51').

4. Dispositif selon la revendication 2 ou 3, caractérisé en ce que la soupape d'arrêt (51, 51') comporte des manchons (52, 53) pour l'alimentation et l'évacuation de l'air, et au moins l'un des manchons (52, 53) est incliné.

5. Dispositif selon la revendication 2 ou 3, caractérisé en ce que la soupape d'arrêt (51) est engagée par les manchons (52, 53) de manière étanche dans les ajutages (42, 45) de la conduite de ventilation du boîtier (22).

6. Dispositif selon la revendication 1, caractérisé en ce que la conduite de ventilation (46) passe au moins partiellement à l'extérieur du boîtier (22), et la soupape d'arrêt (51) se trouve à l'extérieur du boîtier (22).

7. Dispositif selon la revendication 6, caractérisé en ce que la soupape d'arrêt (51) est prévue dans une cavité (62) du boîtier (22).

8. Dispositif selon la revendication 6, caractérisé en ce que la soupape d'arrêt (51) forme avec le boîtier (22) du filtre adsorbant (1), un ensemble d'assemblages compacts.

9. Dispositif selon la revendication 1, caractérisé en ce qu'un filtre à particules (41) est prévu sur le boîtier (22) du filtre adsorbant (1) et sa surface est suffisamment grande pour n'engendrer qu'une faible chute de pression dans le filtre adsorbant (1).

10. Dispositif selon la revendication 9, caractérisé en ce que le filtre à particules (41) forme une paroi extérieure du boîtier (22) et relie une chambre de filtre (38) du boîtier (22) à l'atmosphère, d'une manière perméable au gaz.

11. Dispositif selon la revendication 10, caractérisé en ce que le filtre à particules (41) s'étend sur toute la section intérieure du boîtier (22) perpendiculairement à l'axe longitudinal (19) du boîtier.

12. Dispositif selon la revendication 10 ou 11, caractérisé en ce que la chambre de filtre (38) est séparée d'une chambre de retenue (37) par une cloison (36), cette chambre est reliée à une chambre d'adsorption (28) recevant un milieu d'adsorption (31) dans le boîtier (22), et la chambre de filtre (38) est reliée à la chambre de retenue (37) par une conduite de ventilation (46).

13. Dispositif selon la revendication 10 ou 11, caractérisé en ce que la chambre de filtre (38) est séparée par une cloison (36) d'une chambre d'adsorption (28) contenant un milieu adsorbant (31) dans le boîtier (22), en étant reliée par une conduite de ventilation (46).

14. Dispositif selon la revendication 12 ou 13, caractérisé en ce que la chambre d'adsorption (28) est subdivisée en des chambres (57, 58, 59 ; 67, 68, 69, 70) par au moins une tôle de guidage (60, 61 ; 63, 64) déviant le courant d'air.

15. Dispositif selon la revendication 1, caractérisé en ce qu'un capteur de pression (80) est prévu dans ou sur le filtre adsorbant (1).

16. Dispositif selon la revendication 1, caractérisé en ce que dans ou sur le filtre adsorbant (1), il est prévu une soupape de ventilation de réservoir (3) pour commander la fourniture de vapeur de carburant à travers la conduite d'aspiration (16) vers la tubulure d'aspiration (13) du moteur à combustion interne.
